(19) Europäisches Patentamt
European Patent Office
Office européen des brevets

(11) Publication number: 0 336 595 A1

(12) # EUROPEAN PATENT APPLICATION

(21) Application number: 89302698.9

(22) Date of filing: 17.03.89

(51) Int. Cl.4: D06M 15/507, D04H 1/42, D04H 1/54, D04H 1/00

(30) Priority: 18.03.88 GB 8806419

(43) Date of publication of application: 11.10.89 Bulletin 89/41

(84) Designated Contracting States: AT BE CH DE ES FR GB GR IT LI LU NL SE

(71) Applicant: E.I. DU PONT DE NEMOURS AND COMPANY
1007 Market Street
Wilmington Delaware 19898(US)

(72) Inventor: Marcus, Ilan
56, Montfleury
CH-1290 Versoix(CH)
Inventor: Halling, Robert Allen
2713 Keswick Court
Wilmington Delaware 19808(US)

(74) Representative: Jones, Alan John et al
CARPMAELS & RANSFORD 43 Bloomsbury Square
London, WC1A 2RA(GB)

(54) **Improvements relating to fibers.**

(57) Polyester fiberfill is provided with a slickener coating of an improved copolyester, the improvements being that the copolyester is modified so as to contain polar groups that provide sites that are susceptible to a cross-linking-type reaction, and the resulting materials that have been subjected to such cross-linking-type reaction, whereby the durability of the coating on the fiberfill is improved in comparison with like but unmodified copolymers, and wherein other advantages are obtained.

EP 0 336 595 A1

# IMPROVEMENTS RELATING TO FIBERS

## TECHNICAL FIELD

This invention concerns improvements in and relating to slickened polyester fiberfill material, commonly referred to as polyester fiberfill, as more particularly described herein.

## BACKGROUND OF INVENTION

Polyester fiberfill is used commercially in many garments and other articles, such as sleeping bags, cushions, comforters and pillows. A particularly useful and desirable form of polyester fiberfill has a coating of cured polysiloxane, often referred to as silicone slickener, e.g., as disclosed in Hofmann U.S. Patent No. 3,271,189 and Mead et al. U.S. Patent No. 3,454,422, because certain desirable properties, such as hand, bulk-stability and fluffability are improved thereby in comparison with non-silicone-slickened fiberfill, such as has therefore been referred to as "dry".

Slickened polyester fiberfill has generally been in the form of polyester staple fiber, (preferably essentially poly(ethylene terephthalate), being the cheapest and most available, but specialized materials, such as bicomponents and chain-branched materials are also used) of appropriate (for the intended end-use) denier and cross-section and length cut from polyester filamentary tow, made conventionally by melt-spinning polyester polymer into filaments, collecting such filaments into bundles and processing in the form of a large tow, usually with drawing to increase orientation and crystallinity (although by high speed spinning under appropriate conditions sufficient spin-orientation and crystallinity can be achieved directly), crimping to produce crimped filaments, relaxing the crimped filaments, and converting the continuous tow into staple fibers (although some fiberfill has been used in the form of a continuous filamentary tow), and wherein the polyester fibers (generally while still in continuous filamentary form) are coated with the slickener to improve the aesthetics of the resulting fiberfill, and the slickener is often cured onto the fibers, for instance, conveniently, during the relaxing step. The polyester fibers may be solid, but hollow fibers of specific cross-sections are preferred increasingly for some purposes, e.g., because of their improved insulating properties and light weight.

Despite the widespread commercial use of such silicone-slickened-polyester fiberfill, it has long been recognized that this coating has important disadvantages, together with the desirable qualities. As reported by Pamm U.S. Patent No. 4,281,042 and Frankosky U.S. Patent No. 4,304,817, a silicone coating makes it almost impossible to bond the polyester fiberfill at cross-over points, especially when blends of only slickened polyester fiberfill and binder fiber are heat-treated, so as to activate the binder fiber. Any bonds are very poor and seem to be the result of bonding between residues of any binder fibers that were bicomponent fibers, whose cores remain after bonding. Thus it has not been practical to use such silicone-slickened fiberfill when the objective has been to form a through-bonded batt or molded article that is properly bonded and durable, as is desirable in some end-uses.

The term "through-bonded" is used in distinction to surface-bonding, such as has been achieved by spraying a binder onto the surface(s) and effecting bonding by heat-treatment of this binder, or by other means, such as by chemical curing of this binder that is sprayed only onto the surface of the batt. In contrast, by distributing binder fiber throughout the batt, e.g., by using a blend of fiberfill and binder fiber through-bonding has been obtained, instead of surface-bonding.

Further problems resulting from use of silicone slickeners have included the resulting increase in flammability, and other defects that have been reported in the literature. Some of these are referred to in earlier-filed EPA 87 309 241.5 (Marcus I) filed October 20, 1987, which is hereby incorporated by reference, and which discloses obtaining a significant improvement by replacing the existing commercial silicone slickeners with a hydrophilic coating (that is a polymer containing poly(alkylene oxide) chains or segments) on the surface of the polyester fiberfill. Thus such coated polyester fiberfill can be bonded more effectively than silicone-slickened fiberfill, e.g., using blends of fiberfill with binder fiber, and has other advantages, e.g., improved moisture transport, as mentioned therein.

Marcus I emphasizes that it is important for the hydrophilic coating to be "cured" properly onto the polyester fibers, in other words, that the poly(alkylene oxide) segments be secured as permanently as possible to the surface of the polyester fibers, i.e., so that they will resist removal by washing or by other

treatments that will be encountered in normal processing or use. We refer to this important attribute herein as "durability". Durability can be affected by the action of laundry detergents and other additives, during washing cycles, especially at the elevated temperatures and other conditions that are often recommended for cleaning fabrics and bedding materials. In this regard, we have found that fiberfill, especially slickened fiberfill, and particularly when unbonded, seems to be subjected to conditions that are even more severe than fibers in yarns, perhaps because the latter fibers are restricted in their ability to move in relation to each other, and because it is more difficult for liquids to penetrate between fibers in yarns, especially spun yarns whose fibers are twisted together to form the yarn.

Only two types of commercial poly(alkylene oxide) copolymers, involving two apparently separate and different mechanisms of "curing" are described specifically in Marcus I. The first of these types is said to contain poly(ethylene terephthalate) segments and poly(alkylene oxide) segments, derived from a poly(oxyalkylene) having a molecular weight of 300 to 6,000. Several such copolyesters and dispersions thereof are disclosed in McIntyre et al. U.S. Patent Nos. 3,416,952, 3,557,039 and 3,619,269, and in various other patent specifications disclosing like segmented copolymers containing poly(ethylene terephthalate) segments and poly(alkylene oxide) segments. Preferably the poly(alkylene oxide) will be a poly(ethylene oxide), which is also of commercial convenience. One such product is available commercially from ICI America Inc. as a textile finishing agent and is sold under the trademark "ATLAS" G-7264. This product is sold in Europe by ICI Specialty Chemicals, Brussels. Another has been sold for some time as "ZELCON" 4780 fabric conditioner, by E. I. du Pont de Nemours and Company, i.e., for application to fabrics. ("ZELCON" is also a Registered Trademark.) Examples of suitable copolymers are disclosed in Raynolds U.S. Patent No. 3,981,807. Copolymers are also disclosed in Teijin EP 159882 and ICI Americas, EP 66994. These copolymers of the first type are referred to variously in the prior art, and the methods of "curing" are also referred to variously. Herein, we refer to them conveniently as copolyesters having or comprising polyether segments. It is believed that the preferred materials referred to can be visualized most conveniently as copolyesters, e.g., containing polyoxyethylene (or other polyoxyalkylene) segments (which are the polyether segments) that are linked to terephthalate moieties sometimes referred to as residues, segments, repeat units or linkages) and also ethylene terephthalate moieties so this copolyester, for example, can be considered as comprising both polyoxyethylene terephthalate moieties and ethylene terephthalate moieties, probably linked randomly into the polymer chain.

The other type of material includes modified poly(ethylene oxide)/poly(propylene oxide) grafted with functional groups to permit cross-linking, e.g., by treatment with 5% by weight of citric acid. Such a product is available commercially from Union Carbide as "UCON" 3207A. ("UCON" is a Registered Trademark.)

Although such hydrophilic coatings have provided significant advantages over the use of commercial silicones, the present invention provides still further advantages over the embodiments specifically disclosed in Marcus I, as will be disclosed hereinafter.

Reference is made here to Jayne et al. U.S. Patent No. 3,702,260. Jayne discloses surface-modified polyester fiberfill products having improved compressional recovery and other outstanding properties (see paragraph from column 2 - column 3) and to a method for providing such fiberfill products. The coating is co-crystallized on the surface of the crimped polyester staple fiber, and consists of a copolyester comprising about 20-95% by weight of poly(oxyalkylene) units and about 80-5% by weight of ester units identical to those present in the polyester staple fiber substrate. Batts of such coated fibers may be bonded or unbonded and are preferably unbonded (column 2, lines 57-59). Bonding resins may be applied to the batts to prevent any later fiber leakage and/or to prevent shifting of the batting in end-use applications, e.g., by spraying on both sides of the surface in the form of water emulsions, followed by drying and curing (column 5, lines 15-21). Jayne made no mention of binder fibers. Jayne did not use his fiberfill commercially, so far as is known.

Reference is also made to earlier-filed EPA 87 115 403.5 (Marcus II) filed October 21, 1987, which is hereby incorporated by reference, and which discloses the production of fiberballs from a blend of polyester fiberfill and binder fiber and processes whereby such fiberballs may be processed and binder fiber activated so as to produce interesting and improved bonded structures.

## DESCRIPTION OF THE INVENTION

In some respects, the present invention, especially the preferred embodiment, may be visualized as selecting and combining advantageous aspects out of the separate and apparently different embodiments and techniques specifically and separately disclosed in Marcus I. Thus, the preferred copolyester of the first

type of Marcus I containing both polyoxyethylene terephthalate moieties and ethylene terephthalate moieties is modified by inclusion of functional groups, especially polar groups, which permits cross-linking.

Thus, according to the present invention, there is provided improved polyester fiberfill that is slickened with a coating of a copolyester having polyether segments as well as polyester linkages, and wherein the improvement is characterized in that the copolyester contains residues of a chemical compound containing polar groups such as hydroxyl groups (OH) and quaternary ammonium and amine groups (referred to generically as NH). Preferred such chemical compounds are polyhydroxy compounds containing at least 3 carbon atoms with hydroxyl functional groups. Sorbitol is an example of a polyhydroxy compound that has given very good results, and is available at a reasonable cost. An important advantage of the new fiberfill coated with these new modified copolyesters is that they can, if desired, be conveniently modified further by cross-linking with a suitable cross-linking agent and that, by such like means, further bonding of the coating in situ can be achieved to improve the durability of the coating on the original fiber substrate. As will be noted, this improved durability is an important advantage over the materials specifically disclosed in Marcus I. Suitable cross-linking action may be by direct esterification, with agents that include polycarboxylic acids, such as citric acid, transesterification, with esters, e.g., of citric acid with lower alcohols, for instance containing up to 6 carbon atoms, or by other cross-linking-type reactions, as will be described.

As described herein, the new types of fiberfill, coated with the new (modified) copolyesters, show significant comparative advantages in various end-uses, and are particularly advantageous for making unbonded batts, and bonded batts from blends with binder fibers, especially sheath/core bicomponent binder fibers, and for use in making fiberballs for various end-uses, as indicated.

There is also provided, according to the present invention, an improved process for preparing slickened polyester fiberfill in the form of staple fibers, comprising the steps of melt-spinning polyester into filaments, processing a bundle of filaments in the form of a tow, if desired by drawing and possibly annealing to increase orientation and crystallinity, crimping to produce crimped filaments, relaxing the crimped filaments, and converting the filaments into staple fibers, wherein the polyester fibers in the form of filaments or staple fibers are coated with a slickener to improve the aesthetics of the resulting fiberfill, and wherein the slickener is a copolyester having polyether segments as well as polyester linkages, characterized in that the polyester fibers are coated with a copolyester containing residues of a chemical compound containing polar groups as aforesaid, such as hydroxyl groups (OH) and (NH) groups (quaternary ammonium and amine groups).

The polyester fiberfill may be as described herein, and is preferably used in the form of crimped staple fibers of poly(ethylene terephthalate) as a main or essentially only polymeric material, of appropriate denier and other dimensions and qualities to suit the intended end-use.

A wide variety of copolyesters may prove appropriate for commercial application, as indicated hereinafter, with preferred base copolyesters (i.e., before modification according to the invention) having approximately equimolar amounts of poly(oxyethylene) terephthalate and ethylene terephthalate moieties, although the amounts and specific materials may be varied to suit the desired objective. For instance, the polyether segment may vary upwards, e.g., up to about 85% by weight of such copolyester, such as in the range of (about) 50-85% by weight, and the ethylene terephthalate ester moieties may comprise much less, and as little as about 10% by weight, and in the range of (about) 10-35% by weight, constituting what may be regarded as a polyester linkage component, in contrast to the polyether chain component that provides hydrophilicity and other desired attributes to the coated fiberfill.

The multi-polar group modification of the copolyester according to the invention and the operative chemical compounds (and residues remaining in the improved copolyester) that are suitable are indicated in some more detail hereinafter, and preferred materials are the subject of copending application Halling et al PCT/US 89/00829, filed March 6, 1989, the contents of which are hereby incorporated by reference. This copending application gives a simple explanation of such copolyesters, and how they may be prepared, and how they differ from prior art suggestions, and how they may be cross-linked.

The amounts used will, likewise, depend on the objectives desired and the materials used, and may comprise, e.g., as much as about 20% by weight, e.g., of a (residue of a) polyhydroxy compound containing at least 3 carbon atoms with hydroxyl functional groups.

Likewise, the cross-linking-type reactions and operative polyfunctional compounds to effect these are indicated in some more detail hereinafter, and amounts will vary and depend on specific objectives (e.g., intended end-uses) and may be as much as about 10% by weight of the copolyester, e.g., in the range of about 0.5 to about 10% by weight.

The amounts of the copolyester coating on the fiberfill will vary according to desired objectives, and are expected to be relatively small, conventionally being up to about 1% by weight of the fiber, and may be, e.g., in the range of about 0.05 to about 1.2%, by weight.

Particularly useful results are expected for blends of coated fiberfill, according to the invention, with binder fiber, as indicated in Marcus I and Marcus II, and/or the other art referred to, e.g., in amounts about 60 to about 95% by weight of such fiberfill with essentially about 40 to about 5% of appropriate binder fiber, preferably of bicomponent (binder (lower binding temperature) material sheath/core) configuration, and preferably crimped, and compatible with the fiberfill.

Other downstream products are contemplated according to the invention, including batts, fiberballs, molded structures, garments, bedding materials and processes for making and using them, as referred to herein and in the art, and as will be evident to those experienced in the art.

As indicated herein, an important advantage is the significant reduction in sensitivity to heat that can be provided to the coating (as well as the improved durability in normal use) by incorporating small amounts of polar groups into the copolyester structure, such as polyalcohols and quaternary ammonium (or other NH) groups. The polyalcohols are of particular interest because they may be cross-linked directly on the fiberfill during normal processing, by heating of the coated fiberfill. Such hydroxy compounds, for example, have also a potential for reaction with other groups to impart additional properties that may be desired, such as bacteriostatio activity or increased flame resistance, in addition to the advantages of the cross-linked coating copolyester. The cross-linked copolyester coatings have also shown increased durability, e.g., as demonstrated by an ability to withstand long exposure to 180 °C on fiberfill with little or no apparent loss of slickness or hydrophilic properties. Fiberfill coated with preferred cross-linked modified copolyesters based on moieties of poly(ethylene oxide) and of ethylene terephthalate have shown good resistance to laundering and good moisture transport, which make them useful for applications such as bedding, including mattresses, as well as sleeping bags, and apparel. The cross-linking of the fiberfill coatings can also provide an improvement of the hand of the polyester fiberfill, which becomes less oily, while retaining the desirable fiber/fiber friction, as shown herein, although some of these properties will be affected more than others by the particular materials selected.

The polyhydroxy groups can be cross-linked by various types of cross-linking-type reactions, other than direct esterification or transesterification, e.g., by using some appropriate polyvalent compounds, such as titanium compounds, zirconium, aluminum and silicon compounds, e.g., "TYZOR" LA, "TYZOR" TE, "TYZOR" 101 or others that are commercially available from E. I. du Pont de Nemours and Company ("TYZOR" being a Registered Trademark). This type of reaction has the advantage that it need not be carried out at such high temperatures.

The new slickeners (and slickened fiberfill) show various advantages over conventional silicone slickeners, and many such are similar to those disclosed in Marcus I. For instance, they show similar (low) flame response. The fibers treated with the new slickeners have shown good bonding to binder fibers, producing excellent batts with a good slick hand. They have shown useful properties in a variety of applications involving major fiberfill end uses both in bonded and non-bonded batts. These applications appear to be rather similar to many that are characteristic of siliconized fiberfill, in comparison with dry fiberfill, but with some significant advantages over silicones; as mentioned herein, including:

- better bonding to commercially-available binder
improved moisture transport

These concepts, including improving hydrophilic properties and providing a soft hand, make the new coatings and the resulting new coated fibers very desirable products for several other applications, as is apparent from the disclosure herein.

As indicated, we have found, according to the invention, that important improvements in these poly-(alkylene oxide)/(ethylene terephthalate) type copolyesters, when used, e.g., as fiberfill slickeners, can be obtained by having incorporated small amounts of polar groups in the base copolyester of the coating. These can be functional groups, reactive with polyesters, such as hydroxy, carboxy, some carboxylic acid ester, amine groups and quaternary ammonium salts, which can be copolymerized with the base copolyester. Of particular interest are the polyalcohols. Not only have some of these copolyesters shown an increased resistance to heat and an improved hydrophilic character, but they have also been easily cross-linked. Examples of polyalcohols which can be incorporated into the base polymer, according to the present invention, are low molecular weight polyvinyl alcohol, lower molecular weight materials derived or derivable from cellulose-type polymers, sorbitol, glycerols and similar polyalcohols, e.g., with 3 to 10 carbon atoms, and mixtures thereof. Polyglycerols or polypentaerythritols of low molecular weight incorporating, e.g., 2 to 10 groups (especially) of the polyalcohol or similar products are other examples of polyalcohol groups suitable for this invention. The hydroxyl groups available or remaining on the polyalcohol beyond or after cross-linking can be all free, or part of them may have been previously or be subsequently reacted with other chemicals to introduce additional functional groups with provision of enough free hydroxyls to allow a satisfactory cross-linking of the copolyester chains.

Polyethoxy polyalcohols, such as polyoxyethyl sorbitols, (e.g., with 5 or 6 oxyethyl groups) constitute another valuable group of modifiers for copolyesters used as coatings for fiberfill according to the invention. Such products can be preferred sometimes, depending on the objective, due to their hand and high hydrophilicity.

Suitable cross-linker-type materials for the copolyester coatings of the present invention include aliphatic and aromatic polycarboxylic acids and mixtures thereof, including their corresponding esters, e.g., having 2 to 10 carbon atoms. Preferred alcohols in such esters are low molecular weight alcohols, e.g., containing 1 to 6, preferably 1 to 3, carbon atoms. Examples of chemicals which can be used for this cross-linking-type of reaction according to the present invention are polycarboxylic acids or their esters with low molecular weight alcohols such as malonic acid, succinic acid, citric acid, adipic acid, glutamic acid, tartaric acid, phthalic acid, sulfonated phthalic acids (e.g., the dimethyl esters of 5-sulfoisophthalic acid and/or a sodium salt thereof) and similar dicarboxylic and tricarboxylic acids. Such cross-linking-type reaction may advantageously be done, depending on the chemistry, in the presence of esterification catalysts such as zinc acetate or calcium acetate or similar products known in the art. The concentration of the cross-linking agents will generally depend on the number of hydroxyl groups available, and the objective desired. This concentration may, e.g., vary between the theoretical amount required to bond all free hydroxyls and the amount required to bond 5% of the free hydroxyls available, depending on the total amount of (hydroxyl) modifier and on the end-use. For lower concentrations of the polyalcohols (below 5%) the optimum amount of the cross-linker-type is generally higher than for concentrations of 5 to 15%. The percent of hydroxyl groups which should be bonded to achieve desired characteristics usually tends to go down as the total number of hydroxyl groups increases, although optimal cross-linking may be different for different end-uses.

Another possibility (as indicated) for a cross-linking-type of reaction for the copolyesters according to the invention is by using titanium or other polyvalent complexes, such as "TYZOR" LA, as form complex bonds (chelates) and structures with the hydroxyl groups. This procedure may have important commercial potential as it provides an opportunity to cross-link the copolyester fiberfill coatings of the invention at lower temperatures, that may be attractive commercially. This is sometimes desirable for applications such that the coating will not experience significant heating after application to the fiber, or if the coating cannot withstand such temperatures as may be desirable to carry out any cross-linking reaction due to the presence of heat-sensitive groups. Direct cross-linking (esterification with a free acid) is generally slower or needs more favorable conditions than transesterification (with an ester). The concentration of the free polycarboxylic acid used may be, e.g., about 0.05% to about 1%, based on the weight of the coating, or up to only 0.5%, depending on the number of free hydroxyls present. It may be desirable to limit the amount, in practice, to reduce the tendency for any reactions that may be undesirable, such as esterification that degrades the polymer so as to create undesirably low molecular weight products, such as are generally not desired for this application; but this may be desired for other uses, depending on the circumstances.

Other possible cross-linking agents are N-hydroxymethyl and N-alkoxymethyl compounds such as ARKOFIX NG (commercially available from members of the Hoechst group of companies), N,N′ - dimethylol glyoxal urea:

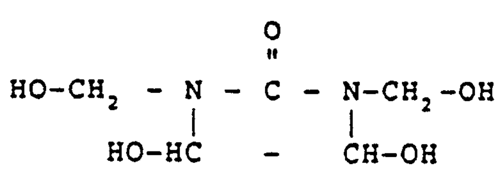

These products and their mechanism of cross-linking are summarized in the review by H. Petersen: "The chemistry of crease resist x-linking agents" (Rev. Prog. Col. vol 17 1987 7).

Other materials which are known to cross-link sugar groups in cellulose or other polysacharides can also be effective in cross-linking the polyhydroxy groups in the copolyesters coatings of the invention.

The cross-linking-type reaction is an important feature of the invention, as it makes possible an improvement in durability, especially an improved resistance to removal of the coating during repeated and/or prolonged laundering and/or heating. This also may improve the hand of the fiberfill, making it slicker and less sticky, (possibly because of bonding of the lower molecular weight products present, although the invention is not to be limited by any speculation herein). The pssibility of formation of bridges between copolyester chains opens other interesting possibilities, e.g., to tailor the same base copolyester to the needs of specific markets, by adding to the emulsion sprayed on the fiber other functional groups (that are preferably heat stable) containing free hydroxyls able to be bonded to the copolyester via a cross-linker-type reaction.

The incorporation of small amounts (such as below 10% per weight) of the coating copolyester of groups other than the polyether, polyester and the polyalcohol, may further enhance existing properties or introduce additional desired properties, without interfering with the cross-linking of the coating. Such desired additional modifications of the basic copolyester may include bacteriostatic quaternary ammonium salts or additional flame retardants with an appropriate functional group, such as an alcohol, for attachment to the copolyester. Such additional modifications may bring added value to the fiberfill, e.g., by providing the fiberfill with improved resistance to growth of bacteria on its surface, or further reduced flame sensitivity. The use of a compound with a very polar group as a bacteriostat, such as a quaternary ammonium salt, may at the same time substantially increase the hydrophilic character of the fibers. Bacteriostatic properties are very desirable for many end-uses to avoid the bad odors, particularly in mattresses, sleeping bags and pillows. Also hindered phenols, phosphites and benzotriazole modification can be desirable, e.g., for antioxidant or ultraviolet screening effects. These groups could either be incorporatable into the backbone of the polymer, during the preparation of the base copolyester or during the modification phase (Example 8), or be attached to the polyester during a cross-linking-type reaction (see Examples 18 and 19).

The addition of a flame retardant in a small amount, e.g., about 1 to 5% on the weight of the coating copolyester, could help build in an additional safety margin, in view of possible contamination of the fiber by flammable oils or silicone deposits coming from the garnetting equipment.

The coating material may be applied as described in Marcus I and Marcus II, and can be applied to the fiberfill either on the crimped staple or preferably on the tow, especially after drawing. The modified copolyester according to the invention can then either be cured to the fiber (by a process that is not understood, and has been said to involve or resemble co-crystallization, depending on the nature of the material) on the fiber surface and/or otherwise (e.g., by a cross-linking-type reaction) as discussed already. Usually the application of the coating material before relaxation is preferred, to produce a product with a desirable softer hand and smoother crimp. The fiberfill filaments are usually cut to staple fibers and baled. The slickened fiberfill of the invention can be used in place of silicone-coated fiberfill with the advantages mentioned herein, e.g., improved moisture transport.

When the coating according to the invention is applied to spirally-crimped fibers, the resulting product is particularly useful as a feed material for the production of fiberballs to be used, e.g., as blow filling material, as disclosed in Marcus II.

When required, the coated fiberfill of the invention can be blended with binder fibers prior to further processing the fiberfill either to produce batts, or fiberballs according to the technology disclosed in Marcus I or Marcus II.

By cross-linking the copolyester by esterification of some of the free hydroxy groups, it is possible to produce an improved coating which can withstand 180°C for 30 minutes (which is beyond present commercial needs, as commercial fiberfill presently does not generally experience more than 170°C for more than 10 minutes). Thus, cross-linking has shown an improvement in durability (less reduction in slickness than this commercial fiberfill or the new fiberfill before cross- linking). This makes polyester fiberfill coated with the cross-linked products of the invention very desirable for several other commercially important applications, as disclosed herein and in the art referred to.

As indicated herein, polyester fiberfill coated with the preferred cross-linked modified poly(ethylene oxide)/poly(ethylene terephthalate) coating has demonstrated these characteristics:

-It has improved durability during heating within the range of temperatures presently used in the trade (up to 180°C).

- It has capability of adhering better to the polyester surface and or presenting better durability during laundering than commercially-available copolymers with poly(alkylene oxide) as a major component.

- It has improved the hand of the coated fiberfill, producing products that are desirably slick and soft, different from the oily "synthetic" hand of fiberfill coated with silicones or with the commercially available poly(ethylene oxide)/polyethylene terephthalate).

- It has bonded well to binder fibers, and produced batts with improved durability and excellent oven-bonding.

- It has shown good moisture transport.

- Flammability has been similar to "dry" fibers.

The invention is further described in the following Examples that are merely illustrative of various embodiments, and are not intended to limit the scope thereof in any manner. All parts are by weight unless otherwise indicated, and the weight basis is as indicated elsewhere herein.

## DESCRIPTION OF TEST METHODS

### Friction Values

Principle: These are measured by the force required to pull a weighted sledge over a staple pad. There is little relative motion between the staple pad and sledge or base; essentially all motion results from fibers sliding over each other. The frictional force (F) is measured using a 500 g sledge weight.

The instrument set up: This consists essentially of a friction table which is mounted on the crosshead of an Instron tester (product of Instron Engineering Corp., Canton, Massachusetts). The base and movable sledge are covered with Emery paper. The surfaces should be changed after 50 measurements.

Staple Pad Preparation: 20 g of staple fibers are carded on a small lab card to produce a batt composed of parallel webs superposed on top of each other with a constant thickness of 20 mm. 100 x 100 mm samples are cut from the batt for the measurements. A minimum of two pads are required for each measurement.

Friction Measurement: The staple pad is laid about 5 cm from the edge of the friction table and the sledge is placed in the middle of the pad and in line with the pulley. The sledge is attached to the load cell with a non-elastic string which goes around the pulley. The friction force is then measured by the movement of the Instron crosshead upward, dragging the pad along the friction table.

Wicking Test: (These have been used to demonstrate the improved hydrophilicity referred to herein). The battings prepared for the Friction measurements above were cut to 10 x 10 cm squares, weighing 1.65 (within 0.05) g, and these were placed between two plastic boards with a spacing of 1 mm. The boards were positioned perpendicularly (parallel to each other) in a metal frame which was placed in a water bucket with the bottom of the plates 10 mm below the water level. The direction of the fibers in the batts was perpendicular to the water plane. The water front was followed, and plotted as a function of time over a period of 8 hours. A level temperature should be maintained (and is generally 25 °C, herein, unless otherwise indicated).

Laundry Trials: For all laundry trials the battings were quilted with a cotton fabric and washed at 40 °C with 3 standard delicate laundry cycles in a home laundry. A washing powder without a softener was intentionally used ("Biancomat") to avoid any interference with the Friction measurements.

## EXAMPLES

### Comparison 1:

Dry polyethylene terephthalate fiber, 4-hole, crimped, 6 dtex. This fiber was used as a standard base for all other items. The increase of the fiber/fiber friction for this item simply reflects the increase of bulk as a result of the heat treatment.

### Comparison 2:

The same fiber as in 1, coated with 0.35% of the commercial "ATLAS" G-7264, mentioned earlier.

### Comparison 3:

The same base fiber as in 1, coated with 0.35% of commercial "ZELCON" 4780, mentioned earlier.

Our experience in practice with polyester fiberfill using such commercially-available copolyester materials as coatings has been that the coatings do have a good mechanical durability, but improvements in slickness would be desirable, for some fiberfill applications, and in durability (sensitivity to) during heating, and to laundering. The hydrophilic character of such products constitutes a substantial improvement versus standard (dry) or silicone-coated polyester fiberfill (which are very hydrophobic) but for some end-uses it would still be desirable for the hydrophilic character to be still further improved. Examples of commercial

uses, where an improvement of hydrophilicity will be particularly beneficial are mattresses, sleeping bags and ski wear. Through using the commercially available materials as a fiberfill coating we have found that these have needed further improvement as follows:

- A substantial amount of the commercially available products tends to "evaporate" (volatilize) when the fiberfill is exposed to the standard temperatures used in the trade in oven bonding, which can result in some loss of slickness, softness and other properties.
- Durability to repeated home laundering could be improved.
- They are not as slick as desired, for some applications, even when there is no oven bonding involved, e.g., in sawn batts, and have a hand which is considered undesirable (too "oily") for some applications.

We have also found that the durability of polyester fabrics, treated with unmodified copolyesters (as referred to herein), to home launderings could be improved. Such fabric treatment, when tested, has not resisted 10 laundry cycles, as desired. Moreover, we have found that the laundry-durability of such coatings has been lower on fiberfill battings than on polyester fabrics; so, to produce satisfactory results in practice, a good slickener for fiberfill has to be more permanent (durable) than for such a fabric finish. We believe that this may be because of the structure of the batt, where practically every fiber is probably exposed to the action of the water and the detergent, and because they are free to move and rub against each other during laundering. Both factors are generally reduced in a fabric structure which holds the filaments together and where the surfaces of the fibers inside the fabric or yarn are generally far less exposed, especially in a spun yarn.

Item 4:

The same dry fiber was coated with 0.35% of a base copolyester, described below, modified with 31% of an ethoxylated isostearyl alcohol containing 20 ethylene oxide units, following the general procedure described below.

Base Copolyester:

This was prepared from the following ingredients in the indicated proportions, using conventional techniques.

| Ingredients | Wt. |
|---|---|
| Dimethyl terephthalate | 1069 |
| Ethylene glycol | 687 |
| Polyethylene glycol | 2539 |
| Zinc acetate dihydrate | 3.5 |
| Lithium acetate dihydrate | 3.5 |
| Pentaerythritol | 30 |

Procedure for the preparation of the modification of the base copolyester:

69 g of the base copolyester is added into a dry 500 ml flask equipped with a stirrer, a thermometer, a condenser, and a nitrogen inlet. The copolyester is heated under a strong nitrogen sweep and the temperature is raised to 150°C. 31 g of ethoxylated isostearyl alcohol having 20 ethylene oxide units is added and the temperature is increased to 180°C. The reaction mixture is stirred and heated under a nitrogen sweep for 8 hours.

Preparation of the emulsion:

The resulting product is allowed to cool to 110°C and then poured into 490 g of rapidly agitated water at room temperature, containing 9 g of a non-ionic dispersing agent. The mixture is vigorously agitated for 30 minutes, then homogenized, to produce a dispersion of about 20% of active ingredients.

Application of copolyester to fibers:

1 kg of the dry, 4-hole, 6 dtex, crimped polyester fiber was sprayed with a diluted dispersion of the copolyester, containing about 6% of active ingredients, to produce 0.35% of active ingredients on fiber (OFW). The coated fibers were put into a 1 m x 1 m ticking made of cheese cloth and heated at 170 °C for 6 minutes in a continuous process on a Famatex tenter frame. The product was then carded on a sampling card.

Example 5:

The same base fiber was coated with the base copolyester modified with 2% sorbitol. The base copolyester was prepared as in 4 above. 90 g of the base copolyester was added into a dry 500 ml flask-equipped with a stirrer, a thermometer, a condenser, and a nitrogen inlet. The copolyester was heated under a strong nitrogen sweep and the temperature is raised to 150 °C. 2 g of sorbitol was added and the temperature was increased to 180 °C. The reaction mixture was stirred and heated under a nitrogen sweep for 8 hours. The resulting product was then allowed to cool to 110 °C and then poured into 478 g of rapidly agitated water at room temperature, containing 9 g of a non-ionic dispersing agent. The mixture was vigorously agitated for 30 minutes, then homogenized, to produce a fine dispersion of about 15% active ingredients. The resulting emulsion was diluted to about 6% and applied to the fiber as before, to produce 0.35% of the coating on fiber weight (OFW).

Example 6:

The same base fiber was coated with a sorbitol-modified copolymer, as in Example 5, but modified with 4% sorbitol. The product shows similar properties to Example 5, but has a higher affinity for water, as shown by its lower drying rate at room temperature.

Example 7:

Example 7 is similar to Examples 5 and 6, but the base copolyester was modified with 6% sorbitol. This product has a somewhat higher Friction than Examples 5 and 6 and is very hydrophilic.

Example 8:

The same base fiber was coated with copolyester made from the base copolyester modified with 14.2% of a quaternized ethoxylated fatty amine of the formula:

$$\begin{array}{l} CH_3 \\ \ |^{+} \\ R-N-(CH_2-CH_2-O)a\ -H \\ \ | \\ (CH_2-CH_2-O)b\ -H \end{array} \qquad CH_3-SO_4$$

where R is a $C_{18}$ fatty alcohol, and a + b = 16.

The modified copolyester used in this Example 8 was prepared from the base copolyester and the quaternized ethoxylated fatty amine according to the procedures described above. It was then transformed into an aqueous dispersion (about 15%) which was sprayed on the same base fiber, using 0.35% OFW, and the fibers were heat-treated to dry the fibers and cure the coating.

Example 9:

This is the same fiber and copolyester as in Example 5, at same concentration on fiber (0.35%), but

cross-linked on the fiber with 0.25% of citric acid. The 15% dispersion of the modified copolyester of Example 8 was diluted to about 6% and 0.25% of citric acid was added. This dispersion was then applied to the fiber by spraying to produce a concentration of 0.35% on fiber weight. The resulting fibers were dried and heated at 170° C for 6 minutes. The fibers were then processed on a card.

Example 10:

The same fiber as in the previous Examples was coated with the 0.4% of base copolyester modified with 2% sorbitol used in Example 9. Cross-linking was done with 2% of triethyl citrate and 0.2% of calcium acetate (on the weight of the copolyester coating). The dispersion was applied to the fibers by spraying and the fibers were then heat treated to dry and cross-link the coating. The treated fibers were carded.

Example 11:

The base fiber was coated as for Example 10 with the same modified copolymer at 0.4% level, but the triethyl citrate was replaced by diethyl succinate at 2%, on weight of the coating copolyester. The same catalyst, 0.2% calcium acetate, was used. The fiber was then heat treated and carded as before.

Example 12:

The modified copolyester emulsion used in Example 5 was mixed with 0.25% of "TYZOR" LA (referred to above) on the weight of the copolyester. The emulsion was dried at room temperature and heated at 170° C for 6 minutes. The resulting coated fiber was carded.

This cross-linking technique does not require high temperature, heating at 170° C was only applied to be comparable with the other items. It is particularly suitable for fibers which cannot stand the temperature, or for applications where such heating is undesirable.

Example 13:

4% of diethyl succinate and 0.2% of calcium acetate (on the weight of the copolyester) were dissolved into the copolyester emulsion prepared in Example 7. Then the emulsion was applied by spraying to the same fibers as in the previous Examples to produce a concentration of 0.4% on fiber weight. The fibers were heated at 170° C for 6 minutes to dry the fibers and cross-link the coating. The resulting treated fiber was carded.

Example 14:

The base copolyester was modified with 4% of ethoxylated sorbitol containing an average of 5 ethylene oxide units per sorbitol molecule, according to the method described in Examples 5, 6 and 7. A final emulsion of 15% in water was prepared from the polymer. 2% of diethyl succinate and 0.2% of calcium acetate (on weight of the modified copolyester) were dissolved into the copolyester emulsion and applied to the same base fiber at a level of 0.4%. The coated fiber was then heated to dry and cross-link the coatings following the procedure used previously.

Example 15:

The base polyether/polyester copolymer was modified with 4% of pentaerythritol, according to the procedure described in Examples 5, 6 and 7. A 15% emulsion was prepared from the modified copolyester. 2% diethyl succinate (on weight of the modified copolyester) and 0.2% calcium acetate (on the weight of the modified copolyester) were dissolved into the copolyester emulsion and the corresponding emulsion was applied to the base fiber to produce 0.4% of the copolyester on the weight of the fiber. The resulting coated fibers were heated to dry and cross-link the coating according to the procedure used previously.

Example 16:

The base copolyester was modified with 5% of low molecular weight polyvinyl alcohol, according to the procedure described in Examples 5, 6 and 7. A 5.6% emulsion was prepared from the modified copolyester. 2% of diethyl succinate and 0.2% of calcium acetate (on the weight of the modified copolyester) were dissolved into the copolyester emulsion and the resulting emulsion was applied to the 6 dtex base fiber to produce 0.4% of the copolyester on the weight of the fiber. The resulting coated fibers were heated to dry and cross-link the coating according to the procedure described previously. The coated fiber was carded.

Example 17:

The base copolyester was modified with 10% of tripentaerythritol, following the procedure described in Examples 5, 6 and 7. A 13% emulsion of the resulting modified copolyester was prepared. 6% of diethyl succinate and 0.2% of calcium acetate (on the weight of the modified copolyester) were dissolved into the emulsion and the resulting emulsion was applied to the base fiber to produce a concentration on fiber of 0.4%. The coated fibers were heated to dry and cross-link the coating, according to the same procedure. The coated fiber was carded.

Example 18:

The emulsion of the copolyester prepared for Example 17 was used also for this Example. The emulsion was diluted in an equal volume of ethyl alcohol and 6% diethyl succinate + 0.2% of calcium acetate and 4% Ethoquad C/25 (all based on the weight of the modified copolyester) were dissolved into the emulsion. Ethoquad is a methyl polyoxyethylene (15) cocoammonium chloride available from Armak Chemicals Chicago (Akzo Chemie America). The resulting emulsion was applied by spraying to the base fiber to produce a concentration of 0.4% of the modified copolyester on the fibers. The coated fibers were heated to dry and cross-link the coating, according to the same procedure.

Example 19:

The copolyester emulsion prepared in Example 17 was diluted in an equal volume of ethyl alcohol and 5.6% of dimethyl terephthalate + 0.2% calcium acetate + 4% Ethoquad C/25 (all on the weight of the modified copolyester) were dissolved in the emulsion. The resulting emulsion was applied by spraying to the base fiber to produce a concentration of 0.4% of the modified copolyester on fiber weight. The coated fibers were heated to dry and cross-link the coating, following the standard procedure.

TABLE 1

| | Initial Friction | Friction After Heating | | |
|---|---|---|---|---|
| Item | | 135°C 5 min. | 180°C 5 min. | 180°C 25 min. |
| CI | 0.59 | 0.61 | 0.69 | 0.78 |
| C2 | 0.50 | 0.52 | 0.70 | 0.79 |
| I4 | 0.43 | 0.43 | 0.56 | 0.71 |
| E5 | 0.42 | 0.45 | 0.47 | 0.52 |
| E8 | 0.46 | 0.50 | 0.50 | 0.53 |

Table 1 compares the heat stability of the different formulations of copolyester coatings on the fibers. All products were applied at 0.35% level, were first dried at room temperature and then heat-treated in an oven (together) at different temperatures and length of time, as indicated. To assess the slickness in relation to the amount of any given finish formulation, the Friction was measured. A low value indicates a low

fiber/fiber friction; which (low value) depends on the amount of any given formulation of the copolymer on the fiber. The data in Table 1 shows the high resistance to heat treatment of the Examples of the invention (using copolymers modified with sorbitol, Examples 5 and 8) versus a commercially-available product (C2). I4 shows introduction of polar groups into base copolyester, and is better than C2, but not so durable (after heating) as Examples 5 or 8.

TABLE 2

| RESISTANCE OF COPOLYESTER COATINGS TO HEAT SETTING AND LAUNDRY | | | | |
|---|---|---|---|---|
| | | Friction Values | | |
| Example | Concentration ofw | Initial | After Heat-Set | After Laundry |
| C1 | 0% | 0.60 | 0.68 | 0.68 |
| C2 | 0.35% | 0.42 | 0.50 | 0.55 |
| C3 | 0.35% | 0.39 | 0.44 | 0.55 |
| E5 | 0.35% | 0.41 | 0.45 | 0.54 |
| E6 | 0.35% | 0.38 | 0.40 | 0.53 |
| E9 | 0.35% | 0.39 | 0.42 | 0.49 |
| E10 | 0.4% | 0.35 | 0.39 | 0.52 |
| E11 | 0.4% | 0.38 | 0.38 | 0.45 |
| E12 | 0.4% | 0.37 | 0.43 | 0.50 |
| E13 | 0.4% | 0.44 | 0.38 | 0.49 |
| E14 | 0.4% | 0.44 | 0.42 | 0.50 |
| E15 | 0.4% | 0.38 | 0.44 | 0.47 |
| E16 | 0.4% | 0.36 | 0.37 | 0.47 |
| E17 | 0.4% | 0.39 | 0.41 | 0.54 |
| E18 | 0.4% | 0.37 | 0.40 | 0.56 |
| E19 | 0.4% | 0.36 | 0.39 | 0.55 |

Table 2 compares the durability on the fibers of the different copolyester coatings in maintaining slickness after heat-setting, and after laundry. It should be noted that even C1 shows an increase in Friction, after heat-setting or laundry; this is a result of the bulking that occurs; so, after accounting for the effects of such bulking, this heat-setting had little or no effect on the slickness of the Examples of the invention.

A comparison of the commercially available copolyesters (Comparisons 2 and 3) with preferred embodiments of this invention (Examples 11, 13, 16) shows significant advantage for the products of the invention.

A comparison of the same basic copolyester coatings, before cross-linking (Example 5) and after cross-linking (Example 9 or 10), shows the effectiveness of the cross-linking in improving durability to laundry.

In some cases, cross-linking can reduce the fiber/fiber friction compared to the non-cross-linked coating, as in Example 13.

Examples 18 and 19 illustrate that other products can be attached to the coatings by cross-linking.

Example 20:

This is the same base fiber and sorbitol-modified copolyester as coating polymer as in Example 5, but the cross-linking technique was modified and a wetting agent was added to improve the spreading of the coating polymer on the fiber.

0.6% OFW of the coating polymer was applied to the fiber from an emulsion containing MERPOL 100 at a concentration of 0.01% and cross-linked with 6% ARKOFIX NG (40%) with 0.5% of magnesium chloride and 0.3% of citric acid (both on weight of the coating polymer). The fiber was then heat treated and carded as in the previous Examples.

Example 21:

296 g of the base copolyester, described under item 4, was placed in a dry flask equipped with a stirrer, a thermometer and nitrogen inlet. The copolymer was heated to 150 °C, and 20g of sorbitol were added, followed by 18g of ETHOMEEN C/12 quat (E53645-40), being a quaternay ammonium antibacterial agent. The mixture was heated to 180 °C, and kept 2 hours at this temperature under a strong stirring and a nitrogen stream. The mixture was stirred and heated under vacuum for 2 additional hours. The mixture was then cooled to 150 °C and poured, under a strong agitation, into 1885g of water containing 33g of IGEPAT CO-970. The mixture was then stirred and homogenized.

The resulting copolymer was applied to the same 6.1 dtex fiber at the level of 0.6% OFW, and cross-linked with 12% ARKOFIX NG using 0.5% magnesium chloride and 0.3% citric acid (similar to Example 20).

TABLE 3

| | | Friction Values | |
|---|---|---|---|
| Example | Concentration ofw | After Heat-Set | After Laundry |
| 20 | 0.6% | 0.36 | 0.50 |
| 21 | 0.6% | 0.40 | 0.47 |

The effectiveness of the cross-linking with these formulations is clearly demonstrated, especially in Example 21, where the losses are small, despite the presence of antibacterial quaternary ammonium which increases substantially the affinity for water.

The concept presented hereinbefore has been the solution of a problem specific to fiberfill. Nevertheless, once the problem relating to fiberfill has been understood, and its solution, the solution has very interesting possibilities for application to solve other problems that are distinct, but related. At this stage, some of these additional aspects have been tested (to a greater or lesser extent, depending on circumstances) and show varying degrees of promise, whereas others are still at a more speculative stage. Some of these additional aspects will be covered in the following paragraphs, it being understood that this disclosure is not intended to be limiting, and further possibilities will immediately be apparent to those skilled in the appropriate fields of technology.

As mentioned, the problem arose originally and was solved in relation with polyester fiberfill. As mentioned, polyester fiberfill is generally a polyester (crimped) staple fiber. The solution to the problem encountered with polyester fiberfill has produced interesting advantages in the new coated polyester fiberfill in various ways, surprising to us. Building on the basis of what has now been discovered for polyester fiberfill, several advantages for coated polyester staple fibers (coated with the new coatings) have already shown advantages and promises in polyester staple fibers for different end-uses.

Some of these will now be disclosed in broad concept, it being understood that work has already progressed to an advanced stage in at least some of these fields, for which experimental data is already available to support the statements made herein.

An important and growing commercial field for polyester staple fiber is for papermaker staple and other water-dispersible fiber, as disclosed in the literature, including U.S. Patents Nos. 4,707,407 and 4,713,289 and the references mentioned therein, for example. Such fibers, and their precursor continuous filamentary tows in commercial use hitherto have differed from more conventional polyester staple fibers (used hitherto, e.g., for fiberfill) especially in the water-dispersing coating that is required and has been applied. By applying some of the new coatings mentioned herein, it is now possible to improve the water-dispersibility of polyester fibers for use in papermaking, and in wet-laid sheet materials more generally, including fabrics, so this is expected to be an important end-use for the new coating compositions and for new-coated polyester fibers.

Another important end-use that has already shown demonstrated potential is referred to as "fluff-pulp". Fluff-pulp is believed not, previously, to have been an acceptable end-use commercially for polyester staple fiber (not so much, e.g., as papermaker staple, for instance), but the improved wicking character of some of the new-coated polyester fibers has shown great potential, e.g., in diapers and other end-uses where staple fibers are used because of their wicking capacity, generally in association with a desire to wick liquids away from the surface to which the liquid is applied, and contribute to a better spreading of the liquid within and throughout the body of, e.g., the diaper. This may be achieved by spreading the liquid on the surface of the fibers and by maintaining a more open structure, and permits reduction in weight, in association with the

mechanical properties of the polyesters, in contrast with cellulosic fibers.

Another important potential end-use for polyester staple fibers is in spun yarns (i.e., staple fibers twisted (spun) together to form a yarn) and this has almost certainly been the largest end-use hitherto for polyester staple fibers, especially for apparel. A welldocumented (perceived or real) problem for commercial polyester staple fiber has been the hydrophobic nature of the polyester polymer, so much effort and ingenuity has been directed to solving this problem, sometimes described as having an objective of making polyester more "cotton-like". Thus, an important expected end-use is in application of the new coating compositions to polyester staple fiber in the form of spun yarns, or fabrics or garments to render these articles more hydrophilic. If possible, as with other end-uses, it would be desirable to apply the new coating compositions to precursors of the polyester staple fibers, i.e., to the continuous filaments, for instance in the form of a small or large bundle, such as a tow, but, hitherto, although it has been possible to render surfaces of polyester fibers more hydrophilic by applying various types of coating, this improvement in hydrophilic properties has been accompanied by changes, for instance in the frictional characteristics, that have made it difficult, and in effect commercially impractical, to prepare spun yarns from the coated filaments. The new coating compositions herein hold promise for solution to this long-standing problem.

Another aspect of great commercial importance is the new materials themselves that are used as coating compositions for application to polyester fibers for the intended end-use as polyester fiberfill or otherwise, as indicated herein. It is emphasized herein that these new materials are modifications of existing commercial materials, but are believed themselves new, and these new materials are believed important per se. Preferred materials are the subject of copending application PCT/US 89/00829, filed March 6, 1989. It will be understood that, although the materials disclosed herein have already demonstrated advantages in application for the end-use of polyester fiberfill, variations and further improvements are possible, and other embodiments may prove more desirable, for instance for the additional aspects disclosed herein.

Mention has already been made of application of the new coating compositions to continuous filamentary fibers that are the precursors of the polyester staple fibers that are generally used for the applications mentioned above. As additional important aspect is expected to be application of the new coating materials to polyester filamentary yarns, especially to improve their hydrophilic properties and wickability, for use in fabrics and garments for apparel and other end-uses. For multifilament yarns (as opposed to spun yarns from staple fiber), although it is possible to apply the new coating compositions to fabrics and garments and this may have important commercial advantages, it is expected that the most interesting commercial opportunity for application will be to the filaments or yarns as such, in contrast to fabrics and garments. Such yarns are generally used as drawn yarns, but the compositions may, depending on various considerations, be applied to undrawn yarns (e.g., spin-oriented yarns) for use as such or as precursors (e.g., of lower orientation) that are later drawn and/or annealed, e.g., during draw-texturing.

Further interesting possibilities have been opened up for the new coating compositions (and further modifications) for application to fibers other than polyester fibers, which is indeed surprising and one can, at present, only speculate why such advantages are obtained. However, such new coating compositions have already been applied to aramid fibrous materials and to polyolefin fibrous materials, including polypropylene and polyethylene materials to improve the hydrophilic properties of these fibrous materials. As with coated polyester fibers, it seems likely that additional accompanying advantages will be obtained, and that further modification may prove desirable, e.g., to provide a greater degree of chemical or other compatibility between the fiber substrate and the coating composition. Accordingly, a further additional aspect of interest is in application of such new coating compositions to fibers and fibrous materials other than polyester.

Comparisons 22A and 22B

A TYPAR® spunbonded polypropylene sample of 116 g/m$^2$ and dimensions of 40x30 cm was used as Comparison 22A (C22A). For Comparison 22B (C22B), such sheet was sprayed with 0.6% of ZELCON® 4780 followed by drying and heating at 150 °C for 10 minutes on a laboratory tenter frame. These were used to compare with Examples 23 and 24.

Example 23:

The base copolyester was modified with 6% sorbitol according to the general method described in Examples 5, 6 and 7. An emulsion of 15% in water was prepared from the copolymer, and was diluted to about 6%, and MERPOL 100 was added to form a concentration of 0.01%. 12% of ARKOFIX NG and 1.5%

of zinc nitrate (on weight of the copolyester) were added and the mixture was applied to the same TYPAR sheet as in (C22A) to form 0.6% of the copolyester on weight of the spunbonded polypropylene sheet. The sheet was then heat-treated as in Example 22.

Example 24:

The copolyester from Example 23 was applied under the same conditions of 0.6% on the TYPAR weight, but the cross-linking was done with 0.5% of TYZOR LA (on weight of the copolymer). The sheet was then heat-treated on a tenter frame at 120° C for 10 minutes.

The TYPAR comparative tests were assessed by two different tests:

Test 1: wicking test:

The polypropylene sheet (dimensions 40x30 cm) was placed between two horizontal plastic plates, having the same dimensions, with a 20 mm diameter hole in the middle. 2 ml of water were poured through the central hole and the wet area was measured after 1 minute.

| Summary of Wicking results | | | |
|---|---|---|---|
| C22A | C22B | Ex 23 | Ex 24 |
| 11.2 $cm^2$ | 49.6 $cm^2$ | 55.0 $cm^2$ | 99.4 $cm^2$ |

These results demonstrate the effectiveness of the copolymers according to the invention in improving the wicking of polypropylene, which is known to be a very hydrophobic polymer. The preferred treatment is believed to form a much more hydrophilic film on the polypropylene fibers which can spread the water on an area about 9x the non-treated control and about 2x the previous commercial copolyether/polyester.

This difference becomes even more significant, considering the better wet-fastness of the coatings of the invention, due to their cross-linking. The fast spreading of water is an essential improvement for polyolefin work cloth and similar applications, due to the improved moisture transport. This property may be very pertinent to applications such as geotextiles, as further illustrated by the second test, below.

Test 2: Water permeability geotextile-test

Test description:

A sheet of a geotextile (in this case the polypropylene sheet) is placed between two perpendicular plastic cylinders, superposed one on top of each other, having a diameter of 100 mm. A constant flow 20 l/h of water is pumped into the upper cylinder and the amount of water which passed through the geotextile into the lower cylinder within the first 60 seconds is recorded.

| Summary of geotextile results | | | |
|---|---|---|---|
| C22A | C22B | Ex 23 | Ex 24 |
| 200 ml* | 250 ml** | 300 ml** | 320 ml** |

* No dripping in the first 30 seconds
** Starts to drip immediately.

These results demonstrate a significant advantage for the products of the invention as a surface coating for improving the draining of geotextiles made from polyolefins

Example 25:

The copolymer used in Example 7 was mixed with 12% ARKOFIX NG and 1.5% zinc nitrate (on the weight of the copolymer) and MERPOL 100 was added to the mixture to produce a concentration of 0.01%. The resulting mixture was sprayed on a KEVLAR aramid 29 fabric of 283 g/m2 and the fabric was heat-treated at 170° C for 10 minutes.

The samples were evaluated by measuring the wicking properties of an untreated sample and comparing with treated samples (25 A and 25 B) before and after a single laundry cycle at 40° C, the untreated samples before and after laundering being 25C and 25D, respectively. Laundry resistance of the KEVLAR fabric is very good. The samples were cut into 20x5 cm and were suspended above a water bucket with a small weight attached to their end to maintain them straight. The bottom end of the samples was placed at 5 mm below water level. The advance of the water front with time (in minutes) was recorded and is summarized in the Table below.

| Water height in cm | | | | | | |
|---|---|---|---|---|---|---|
| Examples | (60 sec) | 5 | 20 | 60 | 120 | 480 |
| 25C | 2.0 | 3.0 | 3.0 | 3.5 | 4.0 | 4.5 |
| 25A | 3.0 | 3.5 | 3.5 | 5.0 | 5.0 | 7.5 |
| 25D | 3.0 | 3.0 | 3.2 | 3.8 | 4.8 | 6.0 |
| 25B | 4.0 | 5.5 | 7.5 | 10.0 | 11.0 | 12.0 |

## Claims

1. Improved polyester fiberfill that is slickened with a coating of a copolyester, having polyether segments as well as polyester linkages, and wherein the improvement is characterized in that the copolyester contains residues of a chemical compound containing polar groups such as hydroxyl groups (OH) and quaternary ammonium and amine groups (referred to generically as NH).

2. Polyester fiberfill according to Claim 1, characterized in that the copolyester has a content of about 0.5 to about 20% by weight of a residue of a polyhydroxy compound, said residue containing at least 3 carbon atoms with hydroxyl functional groups.

3. Polyester fiberfill according to Claim 1 or 2, characterized in that the copolyester has been further modified by having been cross-linked with a cross-linking agent that is a polycarboxylic acid or ester thereof with a lower alcohol.

4. Polyester fiberfill according to Claim 1 or 2, characterized in that the copolyester has been further modified by being cross-linked with an N-hydroxymethyl or N-alkoxymethyl compound.

5. Polyester fiberfill according to Claim 4, wherein the copolyester has been cross-linked with N,N′-dimethylol glyoxal urea.

6. Polyester fiberfill according to Claim 3, 4 or 5, characterized in that content of cross-linking agent is substantially 0.1-20% by weight (of the copolyester).

7. Polyester fiberfill according to Claim 3, 4, 5 or 6, characterized in that the copolyester has been further modified by having been cross-linked with a polyvalent metal compound, such as of titanium, zirconium or aluminum.

8. Polyester fiberfill according to any of Claims 1 to 7, characterized in that the amount of copolyester is substantially 0.05-1.2%, based on the weight of the polyester fiberfill.

9. An improved polyester fiberfill blend consisting essentially of, by weight, substantially 60-95% of polyester fiberfill/5-40% of crimped staple binder fiber having a binding temperature lower than the softening temperature of the fiberfill, characterized in that the fiberfill is according to any of Claims 1-8.

10. A process for making a bonded batt, characterized in that a blend according to Claim 9 is processed into a batt, and such batt is heat-treated to cause bonding at fiber intersections with the binder fiber.

11. A process of forming polyester fiberfill into a batt, characterized in that the fiberfill is according to any of Claims 1 to 8.

12. polyester fiberfill batts prepared by a process according to Claim 10 or 11.

13. Improved Fiberballs consisting essentially of polyester fiberfill, characterized in that the fiberfill is according to any of Claims 1-8.

14. Improved fiberballs consisting essentially of a blend of polyester fiberfill and binder fiber, characterized in that the blend is according to Claim 9.

15. A process for preparing improved molded structures by forming an assembly of fiberballs and heat-treating to cause bonding, characterized in that the fiberballs are according to Claim 14.

16. Improved molded structure prepared by a process according to Claim 15.

European Patent Office

# EUROPEAN SEARCH REPORT

Application Number

EP 89 30 2698

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-3 416 952 (ICI) * Claims; column 3, line 1 - column 4, line 72 * --- | 1,2,8,9 | D 06 M 15/507<br>D 04 H 1/42<br>D 04 H 1/54<br>D 04 H 1/00 |
| D,A | US-A-3 702 260 (C.V. JAYNE et al.) * Claims * --- | 1,2 | |
| D,A | US-A-4 281 042 (G. PAMM) * Claims * --- | 1,2,8-12 | |
| A | US-A-4 312 966 (D.D. NEWKIRK et al.) * Claims * --- | 1,2 | |
| A | EP-A-0 035 263 (HENKEL) * Claims; page 16, lines 16-20 * --- | 1 | |
| A | EP-A-0 144 975 (HOECHST) * Claims * --- | 1 | |
| A | US-A-4 065 599 (S. NISHIUMI et al.) * Claims; column 13, line 51 - column 14, line 65 * --- | 1,14,15 | **TECHNICAL FIELDS SEARCHED (Int. Cl.4)** |
| A | EP-A-0 267 517 (HOECHST) * Claims * ----- | 1 | D 06 M<br>D 04 H<br>C 08 G<br>B 68 G |

The present search report has been drawn up for all claims

| Place of search | Date of completion of the search | Examiner |
|---|---|---|
| THE HAGUE | 08-07-1989 | HELLEMANS W.J.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)